Europäisches Patentamt

European Patent Office

Office européen des brevets

(19)

(11) Publication number: **0 373 278**

**A1**

(12) # EUROPEAN PATENT APPLICATION

(21) Application number: 88480097.0

(51) Int. Cl.5: **G06F 1/00**

(22) Date of filing: 13.12.88

(43) Date of publication of application:
20.06.90 Bulletin 90/25

(84) Designated Contracting States:
**DE FR GB**

(71) Applicant: **International Business Machines
Corporation
Old Orchard Road
Armonk, N.Y. 10504(US)**

(72) Inventor: **Abbes, Gilles
54 Avenue de Ray Bât. 10 A
F-06100 Nice(FR)**
Inventor: **Roman, Thierry**

**11 Rue Prince Maurice
F-06000 Nice(FR)**
Inventor: **Lamboley, Eric
Les Lavandes 48 Avenue Henri Matisse
F-06200 Nice(FR)**
Inventor: **Vachee, Pierre
46 Avenue des Oliviers Le Plan du Bois
F-06610 La Gaude(FR)**

(74) Representative: **Lattard, Nicole
Compagnie IBM France Département de
Propriété Intellectuelle
F-06610 La Gaude(FR)**

(54) **Remote power on control device.**

(57) The device according to the invention is used for powering a system 34 from a remote console 22, to restart the system after a power failure.

The remote console is connected to the system 34 through switched network 28 and autoanswer modem 30. When the connection is established the ring indicator signal of the modem interface 32,33 is provided to the power control system controlling the power distribution in system 34. In response to this signal, the system service processor 36 is powered on so that it is able to send messages to console 22 inviting an operator to enter a password authorizing the general power on of the system 34. The password entered by the operator is sent to processor 36, checked and if it is correct the general power on of the system occurs. If not, the function is cancelled. In addition, the function may be inhibited at the remote system. This insures that the remote powering function is performed safely.

FIG. 1

## Field of the invention

The present invention relates to a device for powering on a machine remotely, through a service processor, ensuring that the operation is made safely.

## Background art

The remote power on function exists in different types of machines. For example, large central processing units are provided with a local console having a key, the actuation of which controls the powering on and off of the unit.

In other systems, the remote power on function is performed through an auto answer modem by sending a message to the machine to be powered on through a remote console. The receiving modem recognizes the message and activates a switch to power on the machine.

The article published in the IBM Technical Disclosure Bulletin in May 1987 at pages 5536 and 5537 describes a remote power control system, wherein the terminal controllers are provided with a remote power on control feature, so that they may be powered on and off by a host processor without using any new commands dedicated to this specific function.

All these systems suffer from a major drawback, since no check is made to assure that the remote power on function can be safely carried out.

## Summary of the invention

An object of the present invention is to provide a device which performs the remote power on function of a machine while assuring that there is no danger for a person who may be repairing or working on the machine.

Another object of the present invention is to provide such a device which allows the power on function to be carried out only under control of authorized persons.

The function of the device according to the subject invention is to power a system from a remote console, which is connnected to the system though the switched network and an autoanswer modem. The modem provides a ring indicator signal to the system, when the connection between the remote console and the autoanswer modem is established. The device is characterized in that it comprises:

- power activating means responsive to the ring indicator signal to set active a first power activating signal,
- remote power control means which are responsive to the active status of the first power activating signal for sending a message through the established connection to the remote console, said message being displayed on the remote console screen to prompt the operator at the remote console to enter a password authorizing the general power on of the system, the entered password being received by said remote power control means, which generates a second power activating signal when said power control means recognizes that the received password is authorized, said second power on activating signal controlling the general power on of the system,
- function cancelling means providing a function cancelling signal which causes the power acticating means to set inactive the first power activating signal, when the remote power control means recognizes that the entered password is not authorized.

## Brief description of the figures

Figure 1 represents the block diagram of two nodes of a communication network, wherein one communication controller is powered from a remote console according to the present invention.

Figure 2 shows the device which implements the remote powering function.

Figure 3 shows the flow chart of the microprogram routine which is implemented in power control system 38 to carry out the present invention.

Figure 4 shows the flow chart of the microprogram routine which is implemented in service processor 52 to carry out the present invention.

## Detailed description of the invention

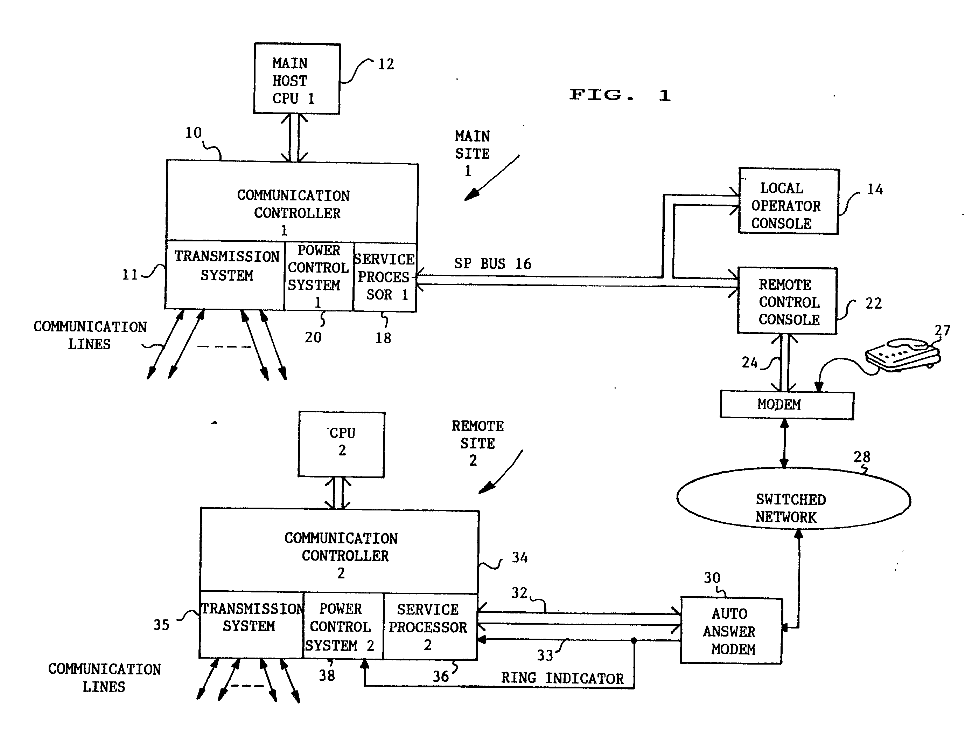

The present invention will be described as implemented in a communication controller of the IBM 3745 type. Machines of such type, are located at nodes of communication networks. There are different types of nodes. Two types are shown in figure 1. At a main site 1, the communication controller 10 which is attached to a main host CPU, 12 is provided with a local operator console 14 which is attached through a SP bus 16 to a service processor 18 of the controller. The transmission system 11 of the controller is attached to communication lines so that network users may send/receive data to/from other network users or applications in the main host or hosts located in other nodes.

The communication controller components are powered through a power control system 20 which comprises a microprocessor to manage the powering on and off of distributed power supply blocks, each block powering given components of the controller.

At this site, a remote control console 22 is also provided, which is used by the operator to check and supervise the operation of the communication controllers located at remote sites. This console communicates with the remote controllers through a link comprising the bus 24, the modem 26, the switched network 28, the autoanswer modem 30 and the bus 32.

By dialing the telephone number of the remote controller 34 on telephone set 27, the connection with the service processor 36 of this controller is established, in a conventional way through the switched network. Modem 30 recognizes its number, the ring indicator circuit of the modem repeats the ring pulses and at the third pulse connects the autoanswer modem 30 to the calling modem 26, thus establishing the connection. Controller 34 is connected to communication lines through its transmission system 35.

The interface bus 32 between modem 30 and service processor 36 comprises a number of wires as conventional, one of these wires is the RING INDICATOR wire 33.

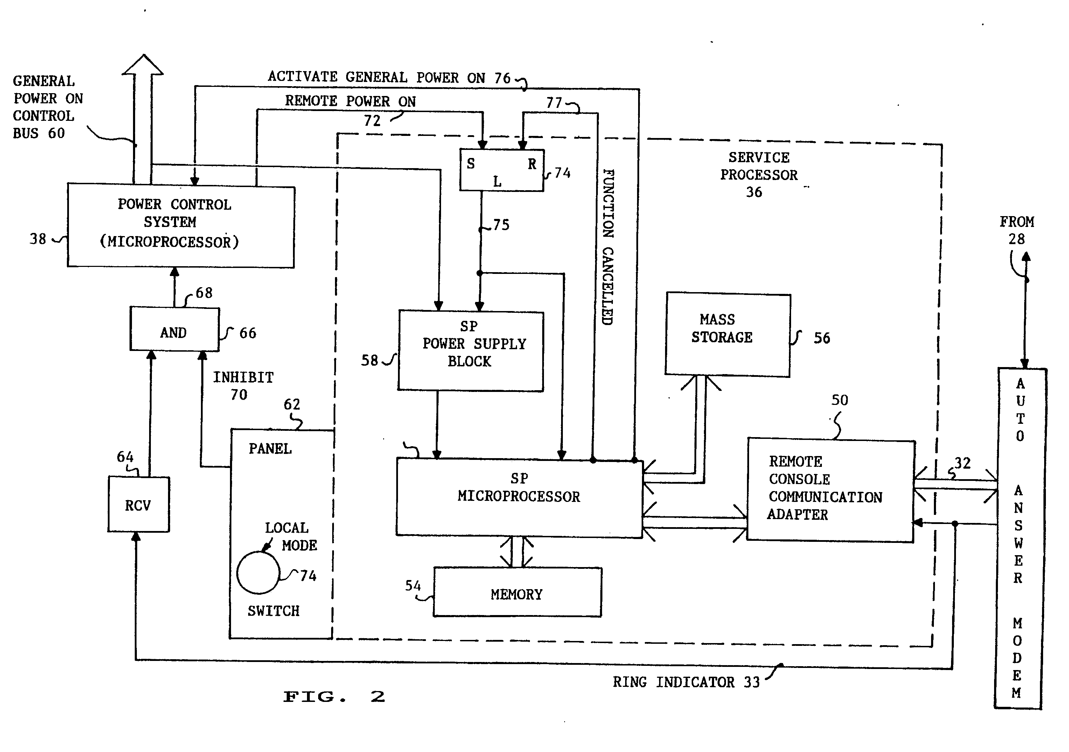

According to the present invention, RING INDICATOR wire 33 is provided to the power control system 38 of controller 34 to start the remote power on function, as will be described in reference to figures 2, 3 and 4.

Each controller at the network nodes runs a network control program. Thus, controller 10 at the main site knows the addresses of the inter node links with the controllers at other sites. So, if a power failure occurs at the remote site 2, the messages sent by controller 10 to controller 34 are no more acknowledged, so that the network control program in controller 10 is aware that controller 34 is down and this state is displayed on console 22 through service processor 18. The operator may restart controller 34 as will be described in reference to figures 2, 3 and 4 using the remote powering function according to the present invention.

Figure 2 only shows the parts of the remote communication controller which are involved in the embodiment of the present invention.

Remote console 22 is attached to service processor 36 through a remote console communication adapter 50 which makes the interface between modem 30 and a microprocessor 52. Microprocessor 52 is the major component of service processor 36, it carries out the maintenance, diagnostics and initial program loading of the controller 34. As conventional, microprocessor 52 is attached to a memory 54 and to a mass storage 56.

Service processor 36 has a separate power supply block 58 which is controlled by power control system 38 as every power supply block of the controller 34 by activation of one line of bus 60.

Power control system 38 also comprises a microprocessor running a specific microprogram. This system is never powered off. Its major function is to power on and off the distributed power blocks in the controller and block 58, through control bus 60.

Its states are the following:
- normal power on state, (each power block is on)
- scheduled power on state (in this state, the power blocks are powered on and off at given times)
- manual power on (in this state, the power blocks are powered on and off manually from the control panel 62)
- idle state (in this state, every block is powered off except the power control system block)

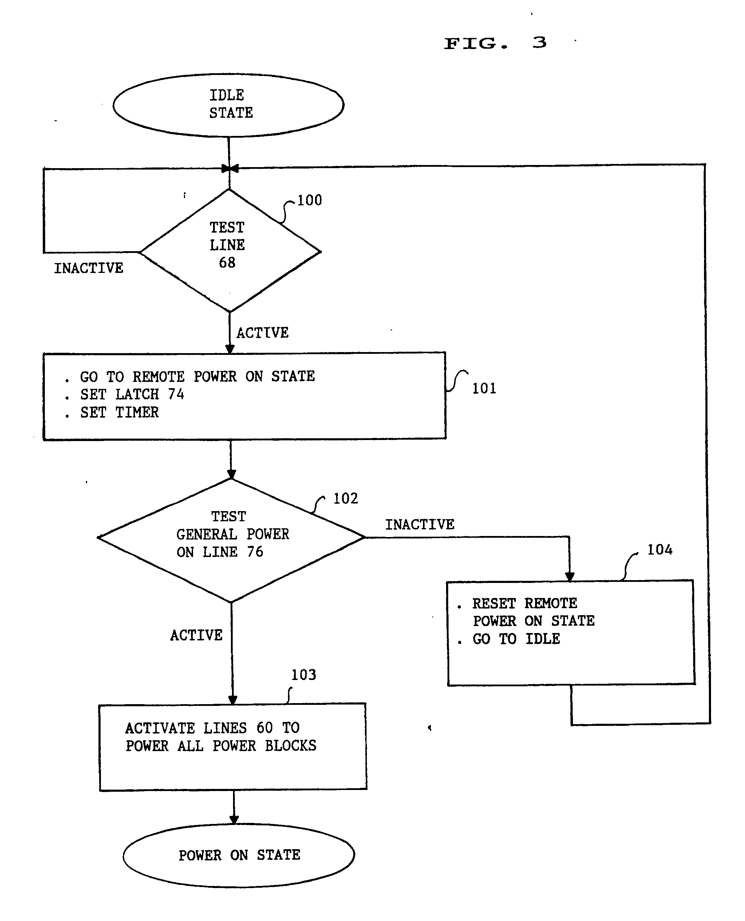

According to the present invention, the remote powering function is controlled by the ring indicator signal on line 33, which is provided on wire 33 to a receiver 64. The power control system is provided with an additional state: remote power state, which allows the remote powering function to be carried out as shown in figure 3.

When the ring indicator signal is received, AND gate 66 is conditioned and provides a signal on its output line 68 provided that inhibit line 70 is not active.

In a preferred embodiment of the invention, inhibit line 70 is activated from control panel 62, through switch 74 which is turned to the "local mode" position by the persons who may be working or repairing the controller 34.

The inhibit signal on line 70 prevents the remote powering function from being carried out, when it is activated.

In another embodiment of the invention, the inhibit signal may be activated when the controller housing is not perfectly closed.

Power control system 38 is responsive to the activation of line 68 to start the remote power on process shown in figure 3.

When latch 74 is set, service processor power supply block 58 is activated through signal on output line 75 of latch 74.

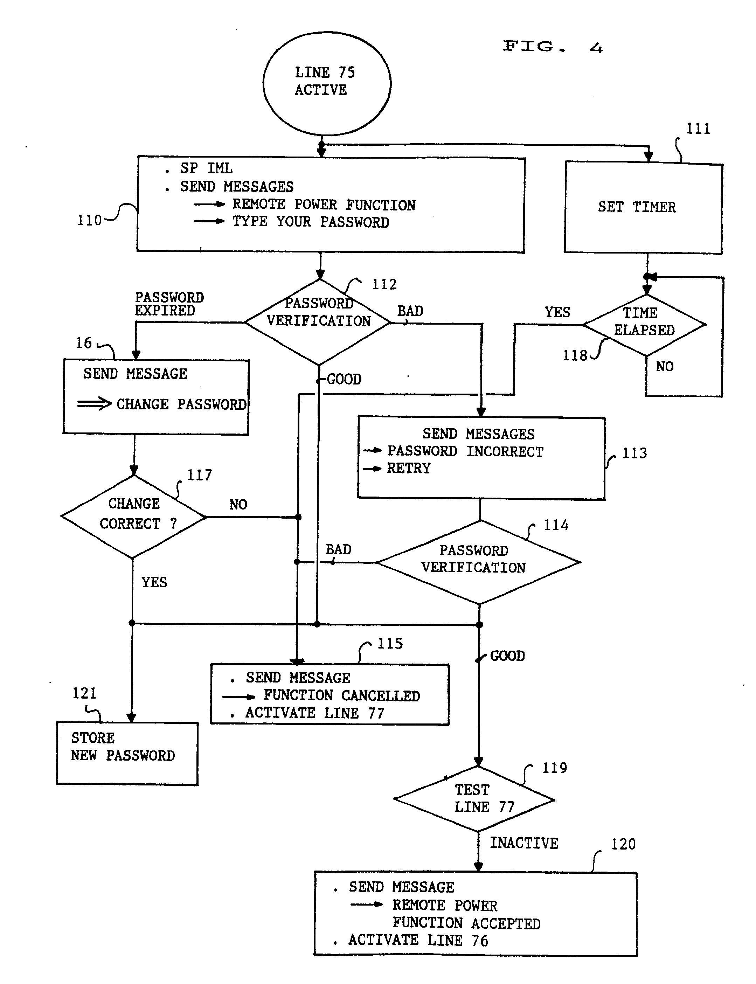

Microprocessor 52 is thus powered on. It starts the general power on process which results in the activation of line 76 or cancellation of the function by activating line 77. Activation of line 77 resets latch 74, as will be described in reference to figure 4, so that microprocessor 52 is no more powered.

Line 75 is provided to one input of microprocessor 52. The general power on process is started by the microprogram controlling microprocessor 52 when line 75 is activated.

Line 68 is one of the input lines of power control system microprocessor 38, which performs the microprogram steps shown in figure 3 to activate output lines 72 and 60, when line 76 becomes active.

In the preferred embodiment of the present invention, these operations are performed by microprogram, however any logic circuit which implements the functions shown in figure 3 could be used.

When controller 34 is down due to a power failure, power control system 38 is in idle state. The microprogram routine which implements the present invention is shown in figure 3.

First, at step 100, the state of line 68 is tested, when it is found active, step 101 is entered.

At step 101, power control system is set in remote power on state, line 72 is activated, which sets latch 74. In addition a timer is set to a value sufficient to allow the operations which have to be done by the operator from the remote control console, to be completed. Then, at step 102, line 76 is tested, if it becomes active before the time duration set by timer is elapsed, output lines 60 are activated to activate all power blocks of the controller 34, including block 58 (step 103). The power control system goes to its normal power on state.

If it is found inactive at the end of the time duration set by timer, the remote power on state is reset at step 104 and the power control system goes to its idle state.

It will now be described in reference to figure 4, the routine which is implemented by the microprogram controlling microprocessor 52 to perform the remote power on function.

This routine is entered when line 75 becomes active. At step 110, service processor 36 starts the initial microcode loading IML operation, in a conventional way, so that it is able to send messages through the established link to remote control console 22. These messages are the following:
= = => REMOTE POWER FUNCTION
= = => TYPE YOUR PASSWORD

At the same time, a timer is set to a value equal to the maximum duration normally required to perform the function (step 111).

The messages are displayed on the remote console screen. Only operators which are authorized to power on the remote controller have a password which is stored in mass storage 56 of the remote controller.

The authorized operator types his/her password at the remote control console keyboard. The password is sent to microprocessor 52 through bus 32 and adapter 50.

The password is checked at step 112. If it is found that the password is incorrect, step 113 is entered. The following messages is sent to remote control console to be displayed on the screen:
= = => PASSWORD INCORRECT
= = => RETRY

The operator types his/her password, which is checked at step 114. If it is still incorrect, step 115 is entered. The following message is sent to the remote control console and displayed:
= = => FUNCTION CANCELLED
and line 77 is activated.

At step 112, it may be found that the password is expired and has to be changed.

In that case, step 116 is entered. The following message is sent to the remote control console:
= = => CHANGE PASSWORD

Microprocessor 52 causes the password change to be performed in any conventional way. If the new password is not accepted at step 117, step 115 is entered. The function is cancelled and line 77 is activated.

The timer value is tested at step 118, when it is found that the time duration has elapsed, step 115 is also entered to cancel the function.

The operator who received the FUNCTION CANCELLED message may take the appropriate steps to have the remote controller repaired.

If it is found at steps 112, 114 and 117 that the passwords are correct, line 77 is tested at step 119. If it is found inactive, step 120 is entered. The following message is sent to the remote control console:
= = => REMOTE POWER ON FUNCTION ACCEPTED

In addition, line 76 is activated. Thus, power control system activates lines 60 and the remote controller is powered on.

After step 117, the new password is stored in mass storage 56.

The present invention has been more particularly described as incorporated in a communication controller system. However, it may be implemented in any system provided that the remote system to be powered, may be accessed from a console or terminal through a telephone link and an autoanswer modem.

It will only be necessary to implement a power control system carrying out the functions shown in figure 3 to activate a device carrying out at least the functions shown in figure 4.

In any cases, since the ring indicator signal is received by a first receiver located in the remote console adapter 50 to be used as the ring indicator signal which is part of the modem interface and by receiver 64, the impedances of both receivers have to be adjusted to meet the standard specifications.

## Claims

1. Device for powering a system from a remote console (22) which is connected to the system through the switched network (28) and an autoanswer modem (30) which provides a ring indicator signal to the system which the connection between the remote console and the autoanswer modem is established, said device being characterized in that it comprises:
- power activating means (64,66,38) responsive to the ring indicator signal to set active a first power activating signal,
- remote power control means (74,58,52) which are responsive to the active status of the first power activating signal for sending a message through the established connection to the remote console, said message being displayed on the remote console screen to prompt an operator at the remote console to enter a password authorizing the general power on of the system, the entered password being received by said remote power control means, which generates a second power activating signal when said power control means recognized that the received password is authorized, said second power activating signal controlling the general power on of the system,
- function cancelling means (77,74) providing a function cancelling signal which causes the power activating means to set inactive the first power activating signal when the remote power control means recognize that the entered password is not authorized.

2. Device according to claim 1 characterized in that the power activating means comprises:
- receiving means (64) which receive the ring indicator signal,
- inhibiting means (62) which provide an inhibit signal when powering on the system from the remote console is undesirable,
- general power control means (66,38) which are responsive to the ring indicator signal from the receiving means, to the inhibit signal and to the second power activating signal, for generating the first power activating signal on a remote power on control output line (72) when the inhibit signal is inactive, and providing a general power on control signal on general power control output lines (60) in response to the second power activating signal.

3. Device according to claim 2, characterized in that the remote power control means (74,58,52) comprise:
- latching means (74) having an output line (75), and being responsive to the active signal on the remote power on control output line (72) to generate an active output signal on the output line and responsive to the function cancelling signal to generate an inactive signal on the output line,
- a separate power supply block (58), which is activated by the active signal on the output line of the latching means, or by a signal on the general power control output lines (60).

4. Device according to claim 3, characterized in that the remote power control means comprise:
- service processor means (52) which are powered by the separate power supply block and are responsive to the active signal on the output line of the latching means, to send the message prompting the operator to enter the password, said service processor means being responsive to the received password to initiate a password recognition process.

5. Device according to claim 4, characterized in that the service processor means generate the second power activating signal on a general power on activation output line (76) which is provided to the general power control means, which activate the general power control output lines (60) in response thereto, when they recognize that the received password is an authorized password, and generate the function cancelling signal on a function cancelling output line (77) when they recognize that the received password is not authorized.

6. Device according to claim 5, characterized in that the service processing means comprise timing means (118) which activates the function cancelling output line (77) when no correct password is received before the end of a fixed period.

FIG. 1

FIG. 2

FIG. 3

IDLE
STATE

TEST
LINE
68    `⌐100`

INACTIVE

ACTIVE

. GO TO REMOTE POWER ON STATE
. SET LATCH 74
. SET TIMER    `⌐101`

TEST
GENERAL POWER
ON LINE 76    `⌐102`

INACTIVE

ACTIVE

. RESET REMOTE
  POWER ON STATE
. GO TO IDLE    `⌐104`

ACTIVATE LINES 60 TO
POWER ALL POWER BLOCKS    `⌐103`

POWER ON STATE

FR988013

FIG. 4

LINE 75
ACTIVE

111

110
. SP IML
. SEND MESSAGES
    → REMOTE POWER FUNCTION
    → TYPE YOUR PASSWORD

SET TIMER

112

PASSWORD
EXPIRED

PASSWORD
VERIFICATION

BAD

YES

TIME
ELAPSED

118

NO

16
SEND MESSAGE
⟹ CHANGE PASSWORD

GOOD

SEND MESSAGES
→ PASSWORD INCORRECT
→ RETRY

113

117
CHANGE
CORRECT ?

NO

BAD

PASSWORD
VERIFICATION

114

YES

115
. SEND MESSAGE
    → FUNCTION CANCELLED
. ACTIVATE LINE 77

GOOD

121
STORE
NEW PASSWORD

119
TEST
LINE 77

INACTIVE

120
. SEND MESSAGE
    → REMOTE POWER
        FUNCTION ACCEPTED
. ACTIVATE LINE 76

FR988013

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 647 721 (BUSAM et al.)<br>* Figure 1; column 2, lines 1-8,17-20,40-44 *<br>--- | 1,2 | G 06 F 1/00 |
| Y | US-A-4 679 226 (MUEHLEISEN)<br>* Figure 1; abstract *<br>--- | 1,2 | |
| Y | IBM TECHNICAL DISCLOSURE BULLETIN, vol. 18, no. 10, March 1976, pages 3197-3198, New York, US; R.G. SIMPSON et al.: "Unauthorized use protection for a computer"<br>* Whole document * | 1,2 | |
| A | Idem<br>----- | 3-5 | |

TECHNICAL FIELDS
SEARCHED (Int. Cl.5)

G 06 F     1
H 04 L    11

The present search report has been drawn up for all claims

| Place of search | Date of completion of the search | Examiner |
|---|---|---|
| THE HAGUE | 03-08-1989 | WEISS P. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)